# EUROPÄISCHE PATENTANMELDUNG

(11) **EP 0 864 764 A2**
(43) Veröffentlichungstag der Anmeldung: **16.09.1998**
(21) Anmeldenummer: 98810089.7
(22) Anmeldetag: 09.02.1998
(51) Int. Cl.: F16B 7/04

(54) **Verbinder zum Verbinden von zwei quer zueinander verlaufenden Hohlprofilstangen sowie Gestell mit solchen Hohlprofilstangen**

(30) Priorität: 12.03.1997 CH 593/97
(71) Anmelder: GEBERIT TECHNIK AG, CH-8645 Jona (CH)
(72) Erfinder: Egli, Anton, 8739 Rieden (CH); Gut, René, 8855 Wangen (CH)
(74) Vertreter: Groner, Manfred

(57) **Zusammenfassung**

Der Verbinder dient zum Verbinden von zwei quer zueinander verlaufenden und jeweils eine Profilierung aufweisenden Hohlprofilstangen. Ein Kopfende (3) wird in eine Nut einer ersten Hohlprofilstange und ein Fussende (2) in einen stirnseitigen Hohlraum einer zweiten Hohlprofilstange eingesetzt und festgelegt. Zum Festlegen des Verbinders (1) wird ein Spannhebel (5) verschwenkt, wobei ein Hebelansatz (8) mit vorstehenden Nocken (9) innenseitig einer Hohlprofilstange in eine innenseitig vorstehende Riffelung der Profilierung eingreift. Der Verbinder zeichnet sich aus durch eine besonders ausreissfeste Verankerung des Fussendes (2) in der entsprechenden Hohlprofilstange.

## Beschreibung

Die Erfindung betrifft einen Verbinder zum Verbinden von zwei quer zueinander verlaufenden und jeweils eine Profilierung aufweisenden Hohlprofilstangen, mit einem Kopfende, das in einer Nut einer ersten Hohlprofilstange festlegbar ist und einem Fussende, das in einem stirnseitigen Hohlraum einer zweiten Hohlprofilstange festlegbar ist, und mit einem Spannhebel.

Ein Verbinder dieser Art ist im Stand der Technik durch die EP-A-0 675 292 des Anmelders bekannt geworden. Der Erfindung liegt die Aufgabe zugrunde, einen Verbinder dieser Gattung zu schaffen, mit dem eine noch höher belastbare Verbindung und damit ein noch stabileres Gestell als bisher herstellbar ist.

Die Aufgabe ist bei einem gattungsgemässen Verbinder dadurch gelöst, dass am Fussende Eingriffsmittel angeordnet sind, die zur Verankerung des Verbinders in der zweiten Hohlprofilstange durch Bewegen des Spannhebels mit einer Profilierung der zweiten Hohlprofilstange in Eingriff bringbar sind. Ein wesentlicher Vorteil des erfindungsgemässen Verbinders besteht darin, dass die Auszugskraft des Verbinders aus der zweiten Hohlprofilstange wesentlich grösser ist als bisher und dass trotzdem die Montage mindestens so einfach und leicht ist wie bisher. Beim erfindungsgemässen Verbinder wird die Profilierung der Hohlprofilstangen vorzugsweise ausschliesslich für die Verankerung des Fussendes verwendet. Das Kopfende ist vorzugsweise ohne Verwendung der Profilierung durch Klemmung in einer entsprechenden Nut fixiert. Nach einer Weiterbildung ist das Kopfende mit Zähnen versehen, welche die Nut seitlich hintergreifen. Eine besonders gute Abstützung ergibt sich dann, wenn das Kopfende seitlich verbreitert ist und sich flächig und breit an der ersten Hohlprofilstange aussenseitig abstützt. Bilden die Eingriffsmittel gemäss einer Weiterbildung der Erfindung mit dem Spannhebel und einem Exzenter eine Einheit, so kann der Verbinder kostengünstig aus zwei Einzelteilen hergestellt werden. Gemäss einer besonders praxistauglichen Ausführung ist ein Gehäuse aus einem gestanzten Blechteil vorgesehen. Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
Figur 1 schematisch eine Ansicht eines erfindungsgemässen Verbinders, der hier noch nicht gespannt ist,
Figur 2 schematisch das Einsetzen eines Verbinders in zwei zu verbindende Hohlprofilstangen,
Figur 3 eine weitere Ansicht des erfindungsgemässen Verbinders, wobei dieser in eine Hohlprofilstange eingesetzt ist,
Figur 4 eine weitere Ansicht des erfindungsgemässen Verbinders, wobei dieser auch in die zweite Hohlprofilstange eingesetzt, aber noch nicht gespannt ist, und
Figur 5 den Verbinder und die zwei miteinander verbundenen Hohlprofilstangen in der Endstellung.

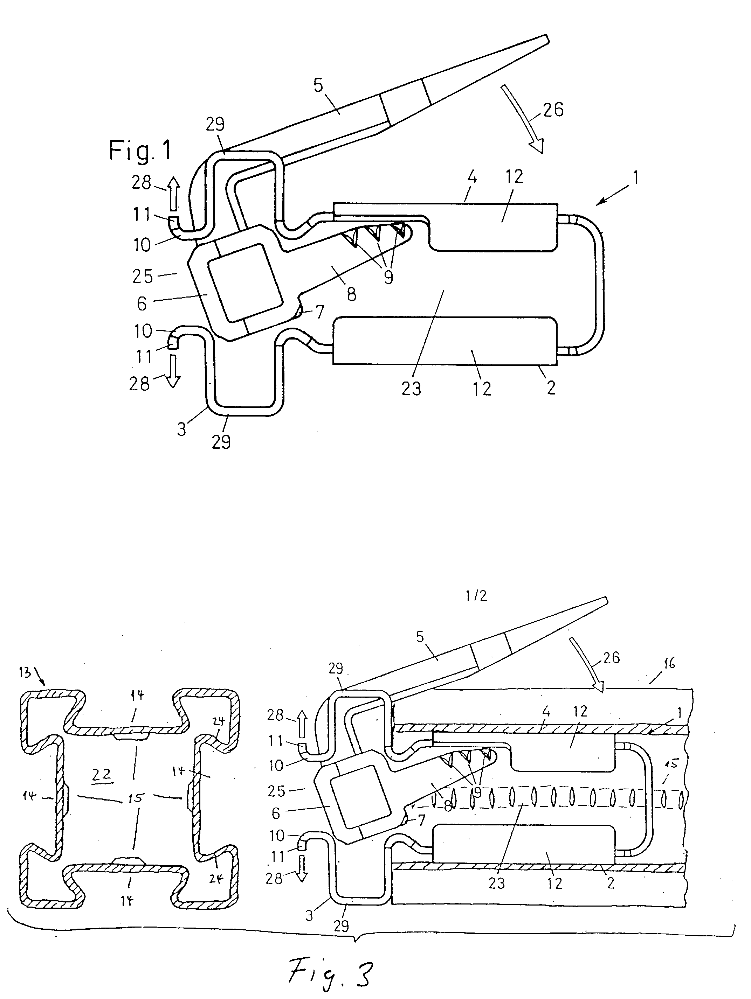

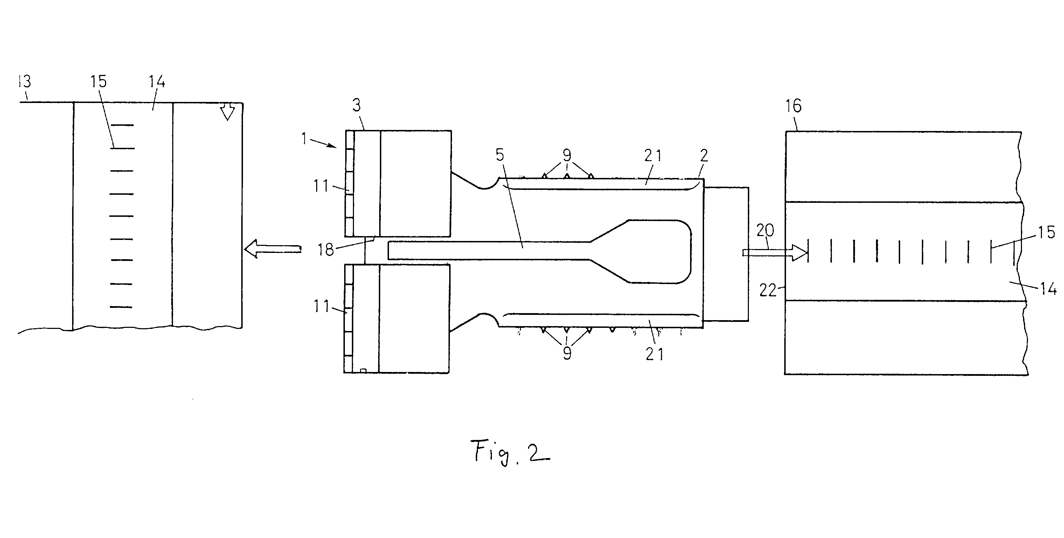

Der in Figure 1 gezeigte Verbinder 1 besteht aus einem vorzugsweise aus Blech hergestelltem klammerartigen Gehäuse 4 und einem separat hergestellten, in dieses Gehäuse 4 eingesetzten Spannhebel 5, der beispielsweise ein Metallgussteil ist. Der Spannhebel 5 wird durch eine Öffnung 25 des Gehäuses 4 eingesetzt. Der Verbinder 1 weist ein Fussende 2 sowie ein Kopfende 3 auf. Zum Verbinden von zwei Hohlprofilstangen 13 und 16 wird gemäss Figur 2 das Kopfende 3 quer zu einer ersten Hohlprofilstange 13 in eine Schwalbenschwanznut 14 eingedrückt und das Fussende 2 in eine stirnseitige Öffnung 22 einer zweiten Hohlprofilstange 16 eingesetzt. Hierbei ist der Spannhebel 5 etwa in der in Figur 1 gezeigten Schwenkposition. Das genannte Einsetzen des Verbinders 1 in die beiden Hohprofilstangen 13 und 16 sowie auch der weitere Montagevorgang kann ohne Werkzeug erfolgen.

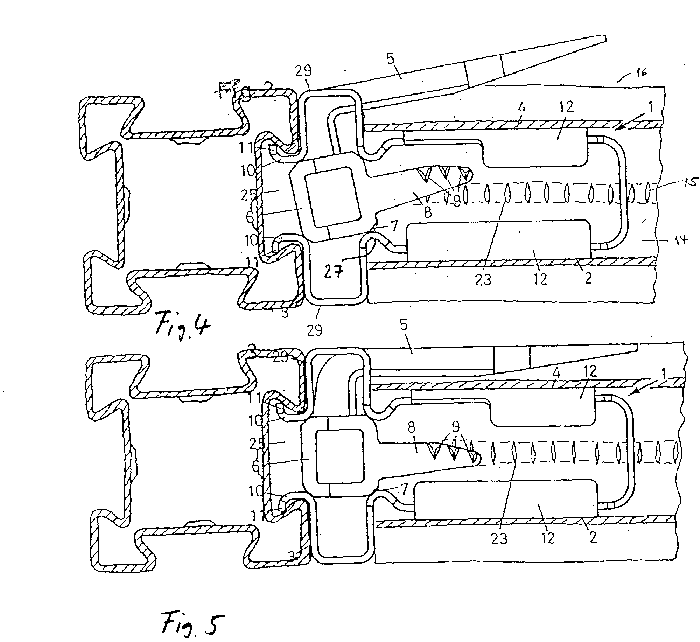

Die beiden Hohlprofilstangen 13 und 16 sind an sich bekannte Profilstangen aus Blech und besitzen jeweils das in Figur 3 gezeigte Profil. Auf jeder Seite der Profilstangen 13 und 16 erstreckt sich über die ganze Länge jeweils eine Schwalbenschwanznut 14, in die eine Profilierung 15 eingearbeitet ist, die innenseitig im Hohlraum 22 vorsteht. Die Profilierung 15 ist eine Riffelung und hier ist besonders wichtig, dass diese Riffelung innenseitig der Profilstange 13 beziehungsweise 16 genau gearbeitet ist. Dies ist für den erfindungsgemässen Verbinder 1 wesentlich, wie nachfolgend erläutert ist.

Am Hebel 5 ist ein Exzenter 6 angeformt, an dem wiederum ein Hebelansatz 8 angeformt ist, der etwa parallel zum Hebel 5 in einen seitlich offenen Hohlraum 23 des Gehäuses 4 hineinragt. An diesem Hebelansatz 8 sind an jeder Seite des Ansatzes 8 mehrere vorstehende Zähne oder Nocken 9 angebracht. Wie in Figur 2 angedeutet, überragen diese Nocken 9 das Gehäuse 4 seitlich etwas. Am Fuss des Hebelansatzes 8 sind weitere Nokken 7 an einer Kante des Exzenters 6 angeformt. Wird der Hebel 5 in Richtung des Pfeiles 26 verschwenkt, so wird durch die entsprechende Verdrehung des Exzenters 6 gemäss Figur 4 das Gehäuse 4 am Kopfende 3 und am Fussende 2 gespannt. Gleichzeitig wird der Hebelansatz 8 verschwenkt, wobei die Nocken 9 bei einer auf das Fussende 2 aufgesetzten zweiten Hohlprofilstange 16 mit gegenüberliegenden Profilierungen 15 in Eingriff kommen, wie Figur 4 zeigt. Gleichzeitig legen sich die Nocken 7 an eine Kante 27 des Gehäuses 4 an. Wird nun der Hebel 5 weiter in Richtung des Pfeiles 26 in die in Figur 5 gezeigte Position nach innen verschwenkt, so überspringen die Nocken 7 die Kante 27, was eine hörbare und/oder spürbare Arretierung ergibt. Ist der Hebel 5 gemäss Figur 5 eingeschwenkt, so liegt er vollständig in einer entsprechenden Nut 14. Der Hebelansatz 8 greift gleichzeitig mit den Nocken 9 in die entsprechenden gegenüberliegenden Profilierungen 15 ein. Dieser Eingriff der Nocken 9 ergibt eine formschlüssige Verankerung des Verbinders 1 in der zweiten Hohlprofilstange 16. Ein Ausreissen des Verbinders 1 aus der zweiten Hohlprofilstange 16 wäre nur noch durch Abscheren der Nocken 9 möglich. Zum Lösen der Verbindung wird der Hebel 5 wieder in die Figur 1 verschwenkt. Da die Zähne 9 nicht verletzt werden, ist wiederholtes Öffnen und Schliessen möglich.

Beim Verschwenken des Hebels 5 von der in Figur 1 gezeigten Position in die in Figur 5 gezeigte Position wird wie erwähnt das Kopfende 3 ebenfalls gespannt, wobei klauenförmige Haltemittel 10 gemäss Figur 1 in Richtung der Pfeile 28 nach aussen bewegt werden. Ist das Kopfende 3 in eine Nut 14 der ersten Hohlprofilstange 13 eingedrückt, so werden diese Haltemittel 10 gegen die seitlichen schrägen Innenwandungen 24 der entsprechenden Nut 14 gespannt. In der in Figur 4 gezeigten Position ist das Kopfende 3 lediglich teilweise in der Nut 14 gespannt. Die Abziehkraft am Kopfende 3 ist hierbei grösser als am Fussende 2. Die Hohlprofilstange 16 kann hier somit zum Ausgleich auf dem Fussende 2 verschoben werden. Ebenfalls kann das Kopfende 3 in Längsrichtung der Nut verschoben werden. Der Kopf 3 wird damit in der Nut 14 verklemmt. Diese Klemmung wird durch zahnförmige Ansätze 11 verstärkt. Der Eingriff der Haltemittel 10 bei geschlossenem Verbinder 1 ist aus Figur 5 ersichtlich. Wie diese Figur zudem zeigt, liegen breite und sich seitlich nach aussen erstreckende Backen 29 des Gehäuses 2 flächig an der Aussenseite der ersten Hohlprofilstange 13 an und stützen damit den Verbinder 1 an der ersten Hohlprofilstange 13. Eine flächige Abstützung findet auch gegenüber der zweiten Hohlprofilstange 16 statt, wobei hier seitliche Abbiegungen 12 innenseitig im Hohlraum 22 an der zweiten Profilstange 16 anliegen. Diese Abbiegungen 12 sowie sich in Längsrichtung des Fussendes 2 erstreckende Wulste 21 (Figur 2) bilden zudem eine Führung beim Einsetzen des Fussendes 2 in die zweite Hohlprofilstange 16. Der erfindungsgemässe Verbinder 1 ist somit nicht nur sehr kostengünstig herstellbar, sondern ergibt bei einfacher und schneller Montage eine sehr belastbare Verbindung zwischen zwei Hohlprofilstangen.

## Patentansprüche

1. Verbinder zum Verbinden von zwei quer zueinander verlaufenden und jeweils eine Profilierung aufweisenden Hohlprofilstangen (13, 16), mit einem Kopfende (3), das in einer Nut (14) einer ersten Hohlprofilstange (13) festlegbar ist und einem Fussende (2), das in einem stirnseitigen Hohlraum (22) einer zweiten Hohlprofilstange (16) festlegbar ist, und mit einem Spannhebel (5), dadurch gekennzeichnet, dass am Fussende (2) Eingriffsmittel (8, 9) angeordnet sind, die zur Verankerung des Verbinders (1) in der zweiten Hohlprofilstange (16) durch Bewegen des Spannhebels (5) mit der Profilierung (15) der zweiten Profilstange (16) in Eingriff bringbar sind

2. Verbinder nach Anspruch 1, dadurch gekennzeichnet, dass die Eingriffsmittel (8, 9) am Spannhebel (5) angebracht und mit diesem verschwenkt werden.

3. Verbinder nach Anspruch 1 oder 2, dadurch gekennzeichnet, dass die Eingriffsmittel (8, 9) einen Ansatz (8) aufweisen, welcher in einen inneren Hohlraum (23) des Fussendes (2) eingreift.

4. Verbinder nach einem der Ansprüche 1 bis 3, dadurch gekennzeichnet, dass die Eingriffsmittel (8, 9) Nokken oder Zähne (9) aufweisen, die in eine innenseitige Profilierung (15) der zweiten Hohlprofilstange (16) einschwenkbar sind.

5. Verbinder nach einem der Ansprüche 1 bis 4, dadurch gekennzeichnet, dass die Eingriffsmittel (8, 9) fest an einem Exzenter (6) angebracht sind.

6. Verbinder nach einem der Ansprüche 1 bis 4, dadurch gekennzeichnet, dass die Eingriffsmittel (8, 9) mit dem Spannhebel (5) und einem Exzenter (6) eine Einheit bilden.

7. Verbinder nach einem der Ansprüche 1 bis 6, dadurch gekennzeichnet, dass er ein Gehäuse (4) aufweist, das aus einem gestanzten Blechteil hergestellt ist.

8. Verbinder nach einem der Ansprüche 1 bis 7, dadurch gekennzeichnet, dass am Spannhebel (5) Nocken (7) zu seiner hörbaren Arretierung angeordnet sind.

9. Verbinder nach einem der Ansprüche 1 bis 8, dadurch gekennzeichnet, dass am Fussende (2) seitlich abgebogene Führungsteile (12) angeordnet sind.

10. Verbinder nach einem der Ansprüche 1 bis 9, dadurch gekennzeichnet, dass der Spannhebel (5) im geöffneten Zustand eine Vorspannkraft auf das Kopfende (3) ausübt.

11. Gestell mit wenigstens zwei quer zueinander verlaufenden Hohlprofilstangen (13, 16), die mit einem Verbinder (1) nach Anspruch 1 lösbar miteinander verbunden sind, wobei das Kopfende (3) des Verbinders (1) in eine Schwalbenschwanznut (14) eingreift, dadurch gekennzeichnet, dass das Kopfende (3) die Schwalbenschwanznut (14) seitlich klemmend hintergreift .

12. Gestell nach Anspruch 11, dadurch gekennzeichnet, dass das Kopfende (3) seitlich nach aussen ragende Zähne (11) aufweist, welche unter Spannung an die Innenwandung (24) der Nut (14) anlegbar sind.

13. Gestell nach Anspruch 12, dadurch gekennzeichnet, dass zwei Zahnreihen (11) am Kopfende (3) angeordnet sind und diese sich im wesentlichen über die ganze Breite des Kopfendes (3) erstrecken.

14. Gestell nach einem der Ansprüche 11 bis 13, dadurch gekennzeichnet, dass das Fussende (2) formschlüssig in der zweiten Hohlprofilstange (16) und das Kopfende (3) bezüglich einer Verschiebung in Längsrichtung kraftschlüssig in der ersten Hohlprofilstange (13) gehalten ist.
